# EUROPEAN PATENT APPLICATION

(11) **EP 2 874 038 A1**
(43) Date of publication of application: **20.05.2015**
(21) Application number: 13193566.0
(22) Date of filing: 19.11.2013
(51) Int. Cl.: G05D 9/12, G01F 23/00

(54) **Automatic drainage device with a level controller**

(71) Applicant: Chen, Po-Hui, Fenyuan Township, Changhua County 50245 (TW)
(72) Inventor: Chen, Po-Hui, Fenyuan Township, Changhua County 50245 (TW)
(74) Representative: Lang, Christian

(57) **Abstract**

An automatic drainage device with a level controller is provided with a tank, a level detection member 3, an isolation layer, and a control unit. The tank has a water storage space. The level detection member is fixed to the tank and includes a fixing portion to be fixed to the tank, and a detection portion connected to the fixing portion and disposed in the water storage space. The detection portion includes a first detection section connected to the fixing portion, and a second detection section connected to the first detection section. The isolation layer is coated on the first detection section of the detection member. The control unit is electrically connected to the level detection member. The automatic drainage device is capable of reducing the possibility of wrong determination of water level.

## Description

### BACKGROUND OF THE INVENTION

### Field of the Invention

The present invention relates to an automatic drainage device, and particularly to an automatic drainage device with a level controller.

### Description of the Prior Art

Water is indispensable in many industrial manufacturing process, therefore, many manufacturing equipments are quipped with an automatic drainage device to supply water required in industrial manufacturing process.

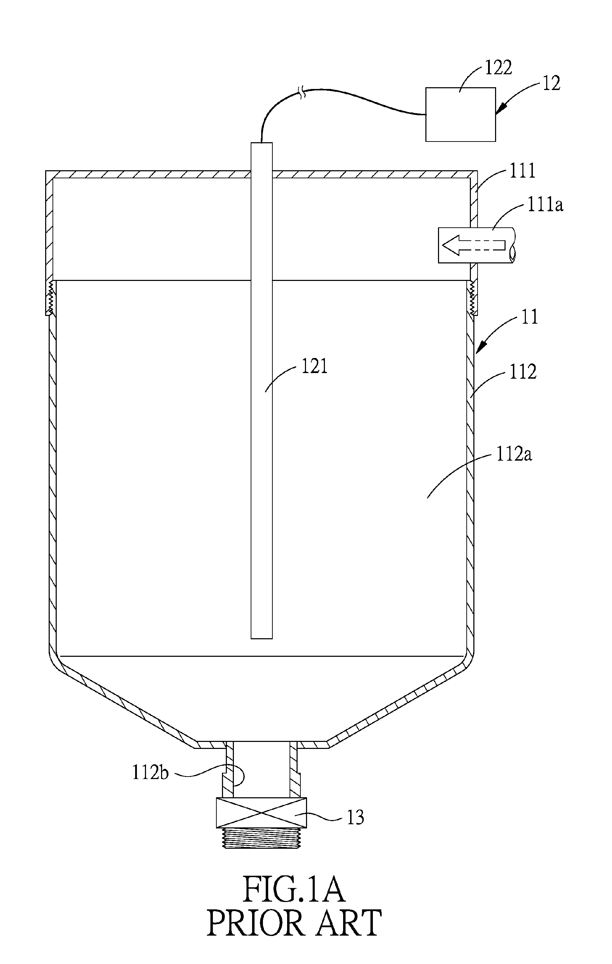

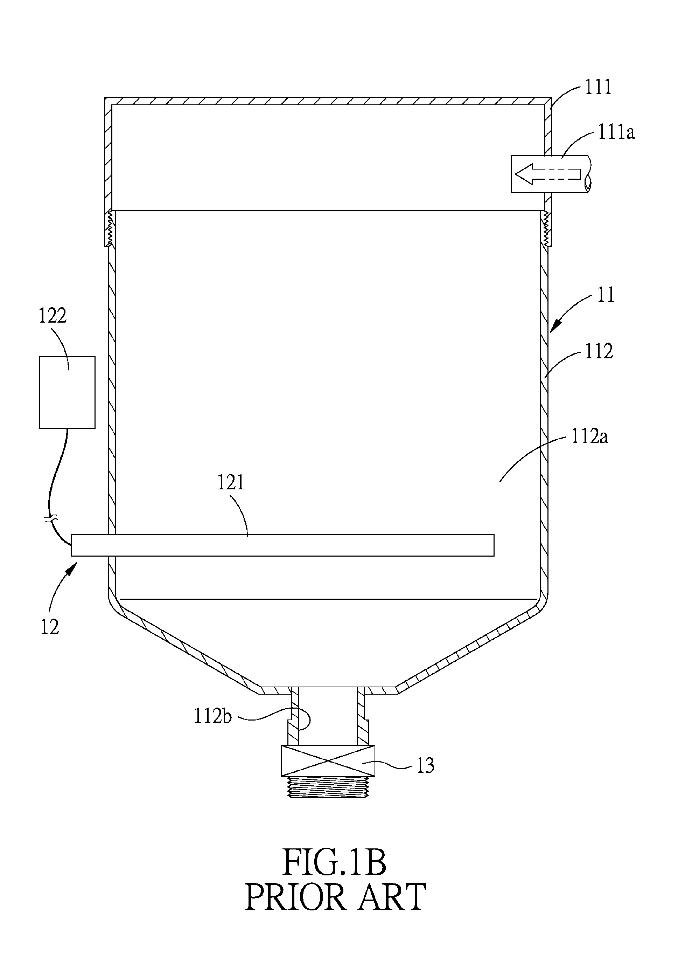

Figs. 1A and 1B show a conventional automatic drainage device which comprises a tank 11 and a level controller 12. The tank 11 includes a cover 111 and a tank body 112. The cover 111 is provided with an inlet 111a through which water can be poured into the tank body 112. The tank body 112 includes an inner space 112a for storage of water, and an outlet 112b which is formed in the inner space 112a and provided with a discharge valve 13 for controlling water volume to be outputted. The level controller 12 includes a (or several) level detection member 121 disposed in the tank 11, and a control unit 122 disposed in the tank 11 and electrically connected to the level detection member 121, so that water level and water output volume can be controlled by using the level detection member 121 to detect the water level and conductance. The difference between Fig. 1A and 1B is that the arrangement of the level detection member 121, in a vertical manner or horizontal manner.

Since the outer surface of the level detection member 121 is exposed and covered with nothing, a signal will be sent to the control unit 122 when any portion of the level detection member 121 comes into contact with water. Once water pressure is too big, during the course of pouring water into the tank 11 via the inlet 111a, water will be sprayed out into the level detection member 121, causing wrong determination of the water level, and the automatic drainage device will start unexpectedly under an improper condition, and as a result, industrial manufacturing process cannot be carried out smoothly. Furthermore, after water is poured into the tank 11 via the inlet 111a, once the water molecular density in the inner space of the tank 11 is too high, water molecular is likely to come into contact with the level detection member 121, resulting in wrong level determination.

The present invention has arisen to mitigate and/or obviate the afore-described disadvantages.

### SUMMARY OF THE INVENTION

The primary objective of the present invention is to provide an automatic drainage device with a level controller capable of reducing the possibility of wrong determination of water level, letting the automatic drainage device start under a proper condition, and allowing the industrial manufacturing process to be carried out smoothly.

To achieve the above objective, an automatic drainage device with a level controller in accordance with the present invention comprises: a tank, a level detection member, an isolation layer, and a control unit. The level detection member, the isolation layer and the control unit constitute the level controller of the present invention. The tank has a water storage space. The level detection member is fixed to the tank and includes a fixing portion to be fixed to the tank, and a detection portion connected to the fixing portion and disposed in the water storage space. The detection portion includes a first detection section connected to the fixing portion, and a second detection section connected to the first detection section. The isolation layer is coated on the first detection section of the detection member. The control unit is electrically connected to the level detection member.

Preferably, the tank includes a tank body and a cover locked to the tank body, the tank body is formed with the water storage space and an inner an outlet in communication with the water storage space, the outlet is provided with a discharge valve, and the cover is formed with an inlet in communication with the water storage space.

Preferably, the level detection member is fixed to the cover of the tank by the fixing portion and disposed in the tank in a vertical manner.

Preferably, the fixing portion of the level detection member is fixed to the tank body and horizontally disposed in the tank.

Preferably, the second detection section is located on a lower end surface of the level detection member.

Preferably, there are two level detection members and two isolation layers, and the second detection sections of the two level detection members are located at different levels.

Preferably, the fixing portion is coated with the isolation layer.

Preferably, the isolation layer is made of waterproof material.

### BRIEF DESCRIPTION OF THE DRAWINGS

Fig. 1A is a cross sectional view of a conventional automatic drainage device;
Fig. 1B is a cross sectional view of another conventional automatic drainage device;
Fig. 2 is a cross sectional view of an automatic drainage device with a level controller in accordance with a first embodiment of the present invention;
Fig. 3 is a cross sectional view of an automatic drainage device with a level controller in accordance with a second embodiment of the present invention;
Fig. 4 is a cross sectional view of an automatic drainage device with a level controller in accordance with a third embodiment of the present invention;
Fig. 5 is a cross sectional view of an automatic drainage device with a level controller in accordance with a fourth embodiment of the present invention;
Fig. 6 is a cross sectional view of an automatic drainage device with a level controller in accordance with a fifth embodiment of the present invention;
Fig. 7 is a cross sectional view of an automatic drainage device with a level controller in accordance with a sixth embodiment of the present invention;
Fig. 8 is a cross sectional view of an automatic drainage device with a level controller in accordance with a seventh embodiment of the present invention; and
Fig. 9 is a cross sectional view of an automatic drainage device with a level controller in accordance with an eighth embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

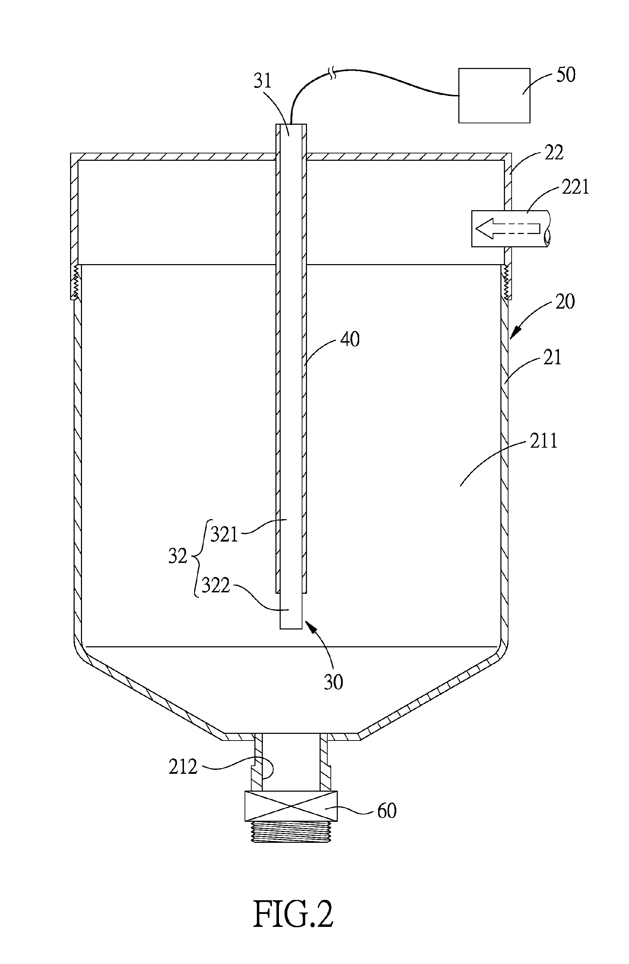

Referring to Fig. 2, an automatic drainage device with a level controller in accordance with a first embodiment of the present invention comprises: a tank 20, a level detection member 30, an isolation layer 40, and a control unit 50. The level detection member 30, the isolation layer 40 and the control unit 50 constitute the level controller of the present invention.

The tank 20 includes a water storage space 211. In this embodiment, the tank 20 includes a tank body 21 and a cover 22 locked to the tank body 21. The tank 20 can be a closed tank or an open type tank. The tank body 21 is formed with the water storage space 211 and an inner an outlet 212 in communication with the water storage space 211. The outlet 212 is provided with a discharge valve 60 for discharging water. The cover 22 is formed with an inlet 221 in communication with the water storage space 211 for allowing water to be poured into the tank body 21.

The level detection member 30 is fixed to the tank 20 and includes a fixing portion 31 to be fixed to the tank 20, and a detection portion 32 connected to the fixing portion 31 and disposed in the water storage space 211. The detection portion 32 includes a first detection section 321 connected to the fixing portion 31, and a second detection section 322 connected to the first detection section 321. In this embodiment, the level detection member 30 is fixed to the cover 22 of the tank 20 by the fixing portion 31 and disposed in the tank 20 in a vertical manner.

The isolation layer 40 is made of waterproof material coated on the first detection section 321 of the level detection member 30, and only the second detection section 322 is exposed to outside.

The control unit 50 is electrically connected to the level detection member 30 and controls the water pouring or discharging operation based on the level of the water in the tank 20 detected by the level detection member 30. The control circuit of the control unit 50 and method for controlling the control unit 50 are well known in the art, therefore further description seems unnecessary.

The fixing portion 31 of the level detection member 30 and the first detection section 321 of the detection portion 32 are coated with the isolation layer 40, and only the second detection section 322 is exposed to detect the water level, so that water can be controlled to be poured into or discharged from the tank 20 based on the water level detected by the second detection 322 of the level detection member 30.

When the level detection member 30 detects that the water level of the tank 20 is too low, and the control unit 50 controls the water to be poured into the tank 20 via the inlet 221, the isolation layer 40 can prevent the poured water from coming into contact with the level detection member 30, causing wrong determination of water level. Furthermore, the problem that the level controller might be electrified (bridge phenomenon), causing wrong determination of water level, when the water molecular density is too high during the course of pour water, can be prevented.

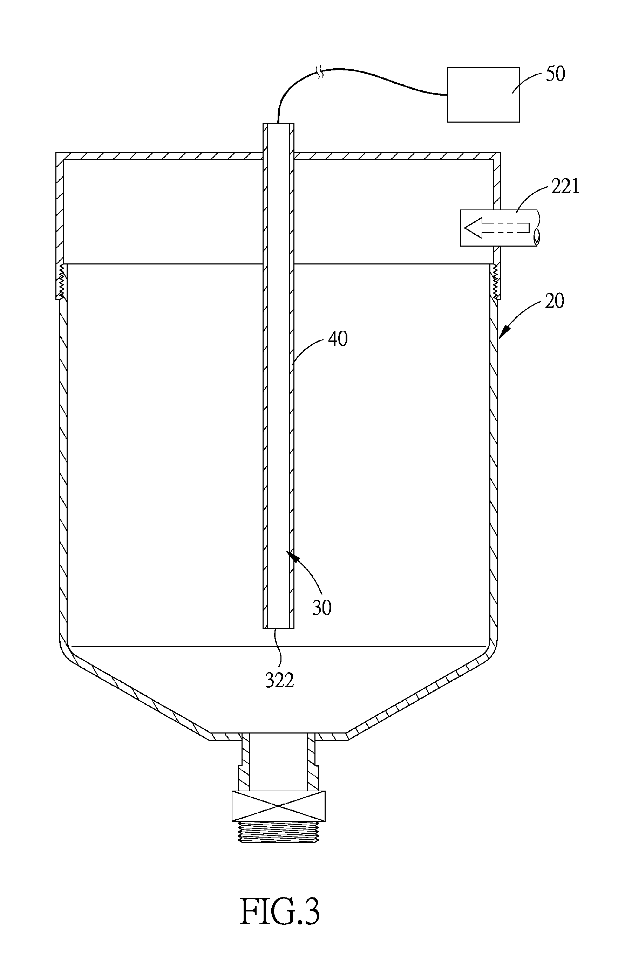

Referring to Fig. 3, an automatic drainage device with a level controller in accordance with a second embodiment of the present invention is similar to the first embodiment, except that: the second detection section 322 is located on an lower end surface of the level detection member 30, and the whole level detection member 30 (including the fixing portion 31) is coated with the isolation layer 40, and only the second detection section 322 is exposed to detect water level.

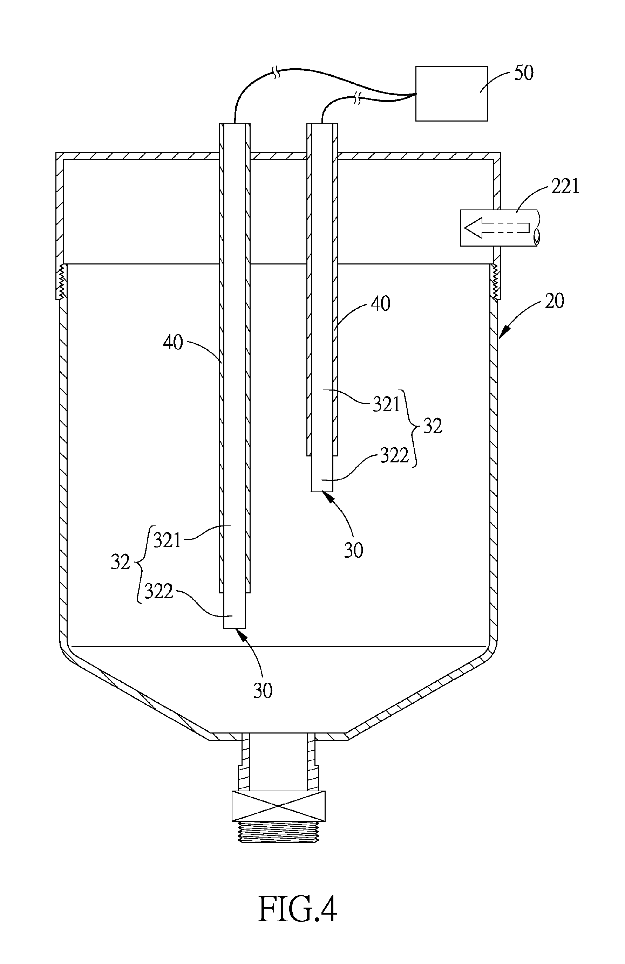

Referring to Fig. 4, an automatic drainage device with a level controller in accordance with a third embodiment of the present invention is similar to the first embodiment, except that: there are two level detection members 30 and two isolation layers 40, and the second detection sections 322 of the two level detection members 30 are located at different levels.

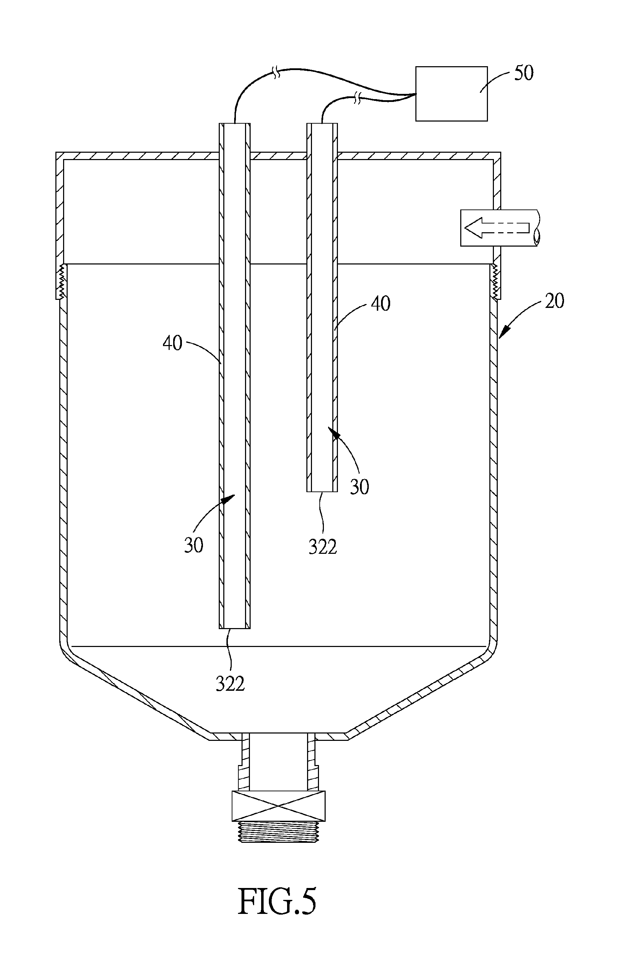

Referring to Fig. 5, an automatic drainage device with a level controller in accordance with a fourth embodiment of the present invention is similar to the third embodiment, except that: the second detection section 322 is located on an lower end surface of the level detection member 30, and the whole level detection member 30 is coated with the isolation layer 40, and only the second detection section 322 is exposed to detect water level.

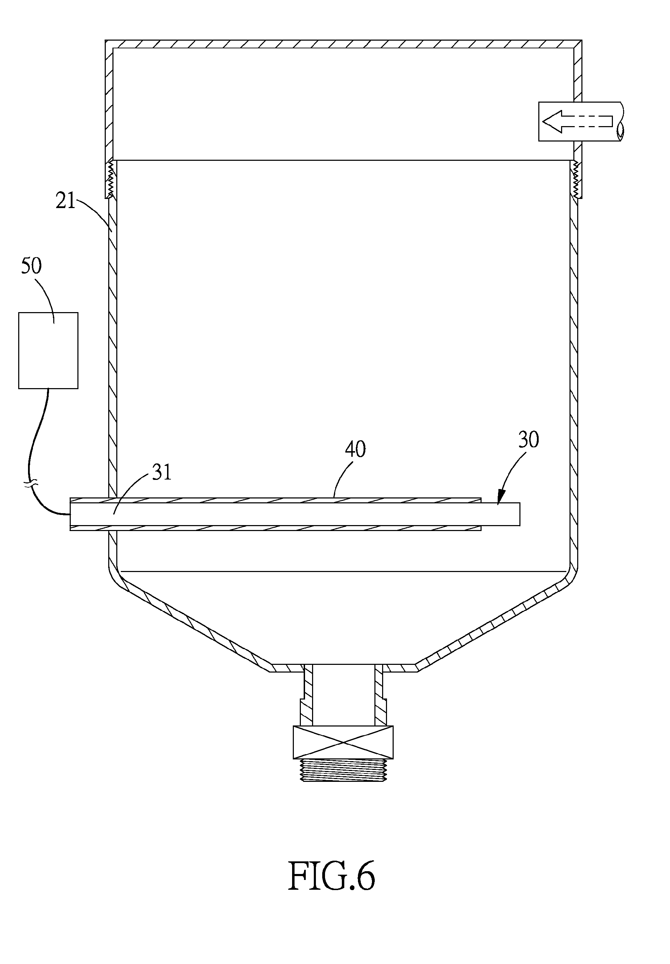

Referring to Fig. 6, an automatic drainage device with a level controller in accordance with a fifth embodiment of the present invention is similar to the first embodiment, except that: the fixing portion 31 of the level detection member 30 is fixed to the tank body 21 and horizontally disposed in the tank 20.

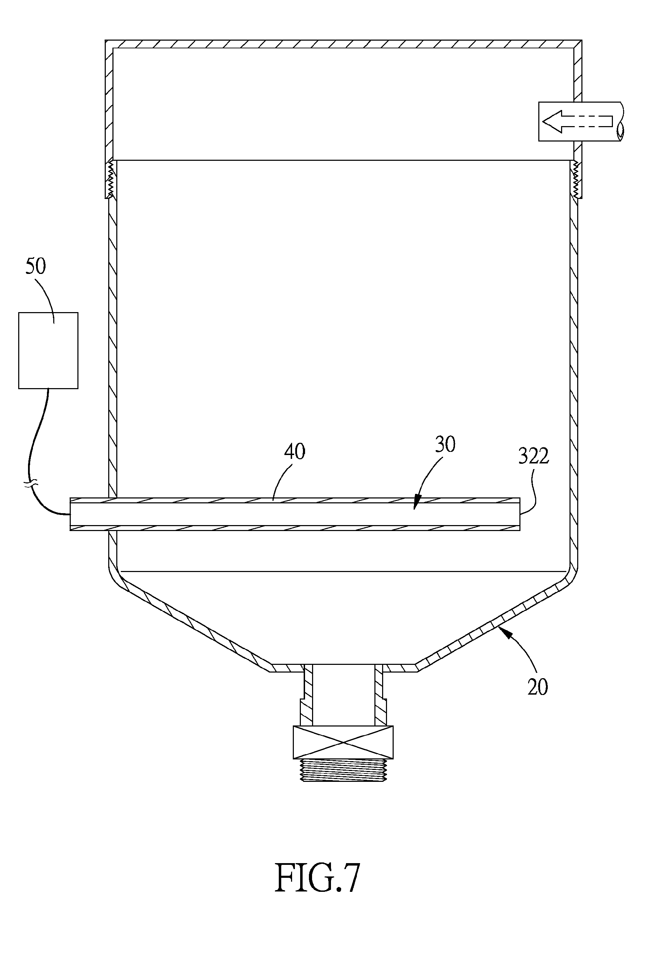

Referring to Fig. 7, an automatic drainage device with a level controller in accordance with a fifth embodiment of the present invention is similar to the fifth embodiment, except that: the second detection section 322 is located on a lateral end surface of the level detection member 30, and the whole level detection member 30 is coated with the isolation layer 40, and only the second detection section 322 is exposed to detect water level.

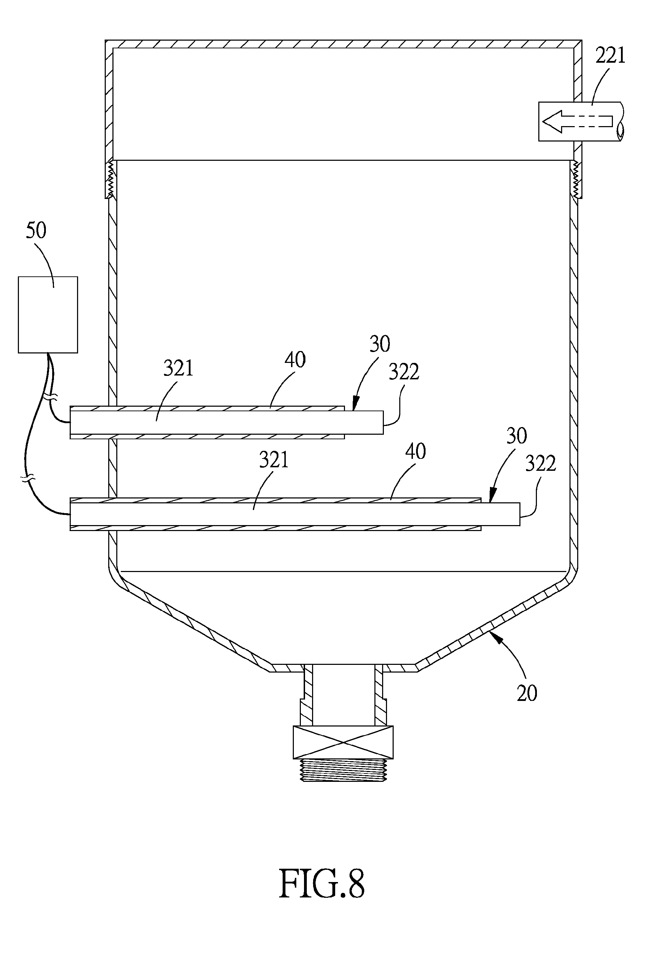

Referring to Fig. 8, an automatic drainage device with a level controller in accordance with a seventh embodiment of the present invention is similar to the fifth embodiment, except that: there are two level detection members 30 and two isolation layers 40, and the second detection sections 322 of the two level detection members 30 are located at different levels.

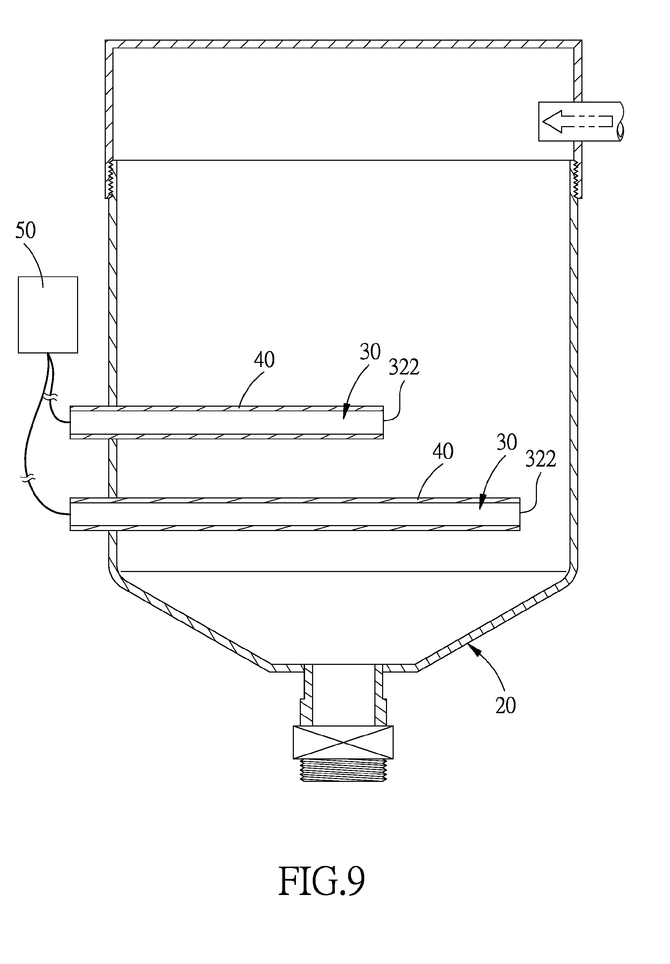

Referring to Fig. 9, an automatic drainage device with a level controller in accordance with an eighth embodiment of the present invention is similar to the first embodiment, except that: the second detection section 322 is located on a lateral end surface of the level detection members 30, respectively, and each of the whole level detection member 30 is coated with the isolation layer 40, and only the second detection section 322 is exposed to detect water level.

While we have shown and described various embodiments in accordance with the present invention, it is clear to those skilled in the art that further embodiments may be made without departing from the scope of the present invention.

## Claims

1. An automatic drainage device with a level controller, comprising:
a tank (20) with a water storage space (211);
at least one level detection member (30) fixed to the tank (20) and including a fixing portion (31) to be fixed to the tank (20), and a detection portion (32) connected to the fixing portion (30) and disposed in the water storage space (211), the detection portion (32) including a first detection section (321) connected to the fixing portion (31), and a second detection section (322) connected to the first detection section (321);
a control unit (50) electrically connected to the level detection member (30);
the automatic drainage device being **characterized in that**:
at least one isolation layer (40) coated on the first detection section (321) of the detection member (30).

2. The automatic drainage device with the level controller as claimed in claim 1, wherein the tank (20) includes a tank body (21) and a cover (22) locked to the tank body (21), the tank body (21) is formed with the water storage space (211) and an outlet (212) in communication with the water storage space (211), the outlet (212) is provided with a discharge valve (60), and the cover (22) is formed with an inlet (221) in communication with the water storage space (211).

3. The automatic drainage device with the level controller as claimed in claim 2, wherein the level detection member (30) is fixed to the cover (22) of the tank (20) by the fixing portion (31) and disposed in the tank (20) in a vertical manner.

4. The automatic drainage device with the level controller as claimed in claim 2, wherein the fixing portion (31) of the level detection member (30) is fixed to the tank body (21) and horizontally disposed in the tank (20).

5. The automatic drainage device with the level controller as claimed in claim 1 or 2, wherein the second detection section (322) is located on a lower end surface of the level detection member (30).

6. The automatic drainage device with the level controller as claimed in claim 1, wherein there are two level detection members (30) and two isolation layers (40), and the second detection sections (322) of the two level detection members (30) are located at different levels.

7. The automatic drainage device with the level controller as claimed in claim 1, wherein the fixing portion (31) is coated with the isolation layer (40).

8. The automatic drainage device with the level controller as claimed in claim 1, wherein the isolation layer (40) is made of waterproof material.

## Amended claims

### Amended claims in accordance with Rule 137(2) EPC.

1. An automatic drainage device with a level controller, comprising:
a tank (20) with a water storage space (211);
at least one level detection member (30) fixed to the tank (20) and including a fixing portion (31) to be fixed to the tank (20), and a detection portion (32) connected to the fixing portion (30) and disposed in the water storage space (211), the detection portion (32) including a first detection section (321) connected to the fixing portion (31), and a second detection section (322) connected to the first detection section (321);
a control unit (50) electrically connected to the level detection member (30);
the automatic drainage device being **characterized in**:
at least one isolation layer (40) made of waterproof material and coated on the first detection section (321) of the detection member (30) to prevent water stored in the water storage space (211) from contacting the first detection section (321), and the second detection section (322) is exposed to an outside to detect the level of the water stored in the water storage space (211).

2. The automatic drainage device with the level controller as claimed in claim 1, wherein the tank (20) includes a tank body (21) and a cover (22) locked to the tank body (21), the tank body (21) is formed with the water storage space (211) and an outlet (212) in communication with the water storage space (211), the outlet (212) is provided with a discharge valve (60), and the cover (22) is formed with an inlet (221) in communication with the water storage space (211).

3. The automatic drainage device with the level controller as claimed in claim 2, wherein the level detection member (30) is fixed to the cover (22) of the tank (20) by the fixing portion (31) and disposed in the tank (20) in a vertical manner.

4. The automatic drainage device with the level controller as claimed in claim 2, wherein the fixing portion (31) of the level detection member (30) is fixed to the tank body (21) and horizontally disposed in the tank (20).

5. The automatic drainage device with the level controller as claimed in claim 1 or 2, wherein the second detection section (322) is located on a lower end surface of the level detection member (30).

6. The automatic drainage device with the level controller as claimed in claim 1, wherein there are two level detection members (30) and two isolation layers (40), and the second detection sections (322) of the two level detection members (30) are located at different levels.

7. The automatic drainage device with the level controller as claimed in claim 1, wherein the fixing portion (31) is coated with the isolation layer (40).
